(19) Europäisches Patentamt
European Patent Office
Office européen des brevets

(11) EP 4 127 023 B1

(12) **EUROPÄISCHE PATENTSCHRIFT**

(45) Veröffentlichungstag und Bekanntmachung des Hinweises auf die Patenterteilung:
**02.07.2025 Patentblatt 2025/27**

(21) Anmeldenummer: **21713982.3**

(22) Anmeldetag: **26.03.2021**

(51) Internationale Patentklassifikation (IPC):
***C08G 64/18*** *(2006.01)* ***C08G 18/44*** *(2006.01)*
***C08G 64/30*** *(2006.01)* ***C08G 65/332*** *(2006.01)*
***C08G 18/70*** *(2006.01)* ***C08G 65/26*** *(2006.01)*

(52) Gemeinsame Patentklassifikation (CPC):
**C08G 64/183; C08G 18/44; C08G 18/70; C08G 64/305; C08G 65/2603; C08G 65/2672**

(86) Internationale Anmeldenummer:
**PCT/EP2021/057877**

(87) Internationale Veröffentlichungsnummer:
**WO 2021/198054 (07.10.2021 Gazette 2021/40)**

# (54) VERFAHREN ZUR HERSTELLUNG EINES POLYOXYALKYLENCARBONATPOLYOLS

METHOD FOR PRODUCING A POLYOXYALKYLENE CARBONATE POLYOL

PROCÉDÉ DE FABRICATION D’UN POLYOL DE CARBONATE DE POLYOXYALKYLÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.04.2020 EP 20167776**

(43) Veröffentlichungstag der Anmeldung:
**08.02.2023 Patentblatt 2023/06**

(73) Patentinhaber: **Covestro Deutschland AG**
**51373 Leverkusen (DE)**

(72) Erfinder:
- **VOGELSANG, Elisabeth**
  **50733 Köln (DE)**
- **HOFMANN, Joerg**
  **47800 Krefeld (DE)**
- **LORENZ, Klaus**
  **41539 Dormagen (DE)**
- **SANDER, Philipp**
  **41516 Grevenbroich (DE)**
- **WERDA, Stefan**
  **41363 Jüchen (DE)**
- **SCHUETZE, Mike**
  **51379 Leverkusen (DE)**

(74) Vertreter: **Levpat**
**c/o Covestro AG**
**Gebäude K12**
**51365 Leverkusen (DE)**

(56) Entgegenhaltungen:
**DE-A1- 102010 043 409 US-B2- 6 806 345**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 127 023 B1

## Beschreibung

Gegenstand der Erfindung ist ein Verfahren zur Herstellung eines Polyoxyalkylencarbonatpolyols durch Umsetzung eines Polyoxyalkylenpolyols mit einem cyclischen Carbonat in Gegenwart eines Amin-Katalysators. Ein weiterer Gegenstand sind Polyoxyalkylencarbonatpolyole erhältlich nach dem erfindungsgemäßen Verfahren sowie ein Verfahren zur Herstellung von Polyurethanen durch Umsetzung der erfindungsgemäßen Polyoxyalkylencarbonatpolyole mit Polyisocyanaten.

US 6,806,345 offenbart ein Poly(ethercarbonat)polyol, das nach einem Verfahren hergestellt wurde, welches in einem ersten Schritt die Herstellung eines Polyetherpolyols durch Polyaddition eines Epoxids an eine Starterverbindung, die aktive Wasserstoffatome aufweist, in Gegenwart eines DMC-Katalysators und in einem zweiten Schritt die Umsetzung des Polyetherpolyols, das den aktiven DMC-Katalysator enthält, mit einem cyclischen Carbonat unter solchen Bedingungen, dass eine Ringöffnung in dem cyclischen Carbonat auftritt, umfasst.

DE 10 2010 043 409 A1 beschreibt ein Verfahren zur Herstellung von Polycarbonatpolyolen durch Polymerisation von cyclischen Carbonaten in Gegenwart von Doppelmetallcyanid-Katalysatoren und Kettenüberträgern bestehend aus Polyethercarbonatpolyolen.

In der WO-Anmeldung WO 2020/127582 A1 wird ein Verfahren zur Herstellung eines Polyoxyalkylenpolyesterpolyols offenbart durch Umsetzung eines Polyoxyalkylenpolyols mit einem Lacton in Gegenwart eines Brönstedsauren Katalysators, wobei der Katalysator einen pKs-Wert von 1 oder kleiner aufweist, wobei die zahlenmittlere Molmasse des Polyoxyalkylenpolyols ≥ 1000 g/mol, bevorzugt ≥ 1500 g/mol, besonders bevorzugt ≥ 2000 g/mol beträgt, und wobei im Lacton eine $CH_2$ Gruppe an den Ringsauerstoff gebunden ist.

WO 2011/000560 A1 offenbart ein Verfahren zur Herstellung von Polyetheresterpolyolen mit primären Hydroxyl-Endgruppen, umfassend die Schritte der Reaktion einer aktive Wasserstoffatome aufweisenden Starterverbindung mit einem Epoxid unter Doppelmetallcyanid-Katalyse, der Reaktion des erhaltenen Produktes mit einem zyklischen Carbonsäureanhydrid sowie der Reaktion dieses erhaltenen Produktes mit Ethylenoxid in Gegenwart eines Katalysators, welcher pro Molekül mindestens ein Stickstoffatom umfasst, wobei nicht-zyklische, identisch substituierte tertiäre Amine ausgenommen sind. Die resultierenden Polyetheresterpolyole dieses mehrstufigen Verfahrens weisen einen primären Hydroxylgruppenanteil von maximal 76 % auf.

In den EP-Anmeldungen EP 3 783 044 A1 und EP 3 783 046 A1 wird die Umsetzung meist kurzkettiger H-funktioneller Starterverbindungen mit cyclischen Carbonaten, wie cyclischem Ethylencarbonat und/oder cyclischem Propylencarbonat in Anwesenheit von Vanadat-, oder Wolframat Katalysatoren offenbart.

In WO2013/028437 A1 wird ein Verfahren zur Herstellung von Polyetherpolyolen enthaltend Oxyethyleneinheiten durch Anlagerung von Ethylencarbonat an H-funktionelle Starterverbindungen in Gegenwart von Doppelmetallcyanid-Katalysatoren offenbart, wobei in den Ausführungsbeispielen die Umsetzung eines Polypropylenoxidtriols mit einer Molmasse von 700 g/mol mit einer Mischung aus Propylenoxid und Ethylencarbonat in Gegenwart von Doppelmetallcyanid-Katalysatoren beschrieben wird. Die resultierenden Polyetherpolyol Produkte weisen dabei primäre Hydroxylgruppenanteile von 8,2 bis 15,9 % auf.

Ausgehend vom Stand der Technik war es daher Aufgabe der vorliegenden Erfindung ein vereinfachtes, möglichst einstufiges Verfahren zur Herstellung von Polyoxyalkylencarbonatpolyolen mit einem primären Hydroxylgruppenanteil von ≥ 65 % bezogen auf die Summe aus primären und sekundären terminalen Hydroxylgruppen bereitzustellen, da diese primären Hydroxylgruppen reaktiver in der nachfolgenden Umsetzung zu Polyurethanen sind, was für verschiedene Polyurethanherstellungsverfahren, wie beispielsweise für Polyurethanweichschaumherstellungsverfahren essentiell ist.

In diesem Verfahren sollten zudem möglichst geringe Mengen eines hochreaktiven, schwermetallfreien Katalysators verwendet werden, so dass möglichst keine Abtrennung des Katalysators vor der Weiterverarbeitung notwendig ist. Des Weiteren soll durch das erfindungsgemäße Verfahren auch die Umsetzung von Starterverbindungen mit vorrangig oder ausschließlich sekundären Hydroxylendgruppen ermöglicht werden, wobei Polyoxyalkylencarbonatpolyole mit einem primären Hydroxylgruppenanteil von ≥ 65 % bezogen auf die Summe aus primären und sekundären terminalen Hydroxylgruppen resultieren. Hierbei soll auch die Viskositätszunahme des resultierenden Produktes infolge der Kettenverlängerung sowie des Einbaus weiterer funktioneller Gruppen, wie beispielsweise Ether- oder auch Carbonat-Gruppen, geringer als Verfahrensprodukte mit vergleichbarem Äquivalenzgewicht aus dem Stand der Technik sein. Eine starke Viskositätszunahme der Polyol-Produkte bedingt eine meist schlechtere oder aufwendigere Weiterverarbeitung zu Polyurethan-Folgeprodukten Überraschenderweise wurde gefunden, dass die technische Aufgabe gelöst wird durch ein Verfahren zur Herstellung eines Polyoxyalkylencarbonatpolyols, bevorzugt eines Polyethercarbonatpolyols, durch Umsetzung eines Polyoxyalkylenpolyols bevorzugt eines Polyetherpolyols, mit einem cyclischen Carbonat in Gegenwart eines Amin-Katalysators.

Im erfindungsgemäßen Verfahren ist unter einem Polyoxyalkylencarbonatpolyol das Umsetzungsprodukt eines Polyoxyalkylenpolyols mit einem cyclischen Carbonat zu verstehen, wobei das Polyoxyalkylencarbonatpolyol einen Polyoxyalkylen Block (A) und mindestens einen Polyethercarbonat Block (B) umfasst. Hierbei weist das Polyoxyalkylenpolyol neben mindestens zwei terminalen Hydroxylgruppen auch Oxyalkylengruppen, wie Ether-und/oder Carbonatgruppen auf. Durch Amin-katalysierte Umsetzung dieses Polyoxyalkylenpolyols mit dem cyclischen Carbonat wird neben dem aus dem Polyoxyalkylenpolyol stammenden Polyoxyalkylen Block (A) auch mindestens ein Polyethercarbonat Block (B) gebildet, wobei die linearen Carbonatgruppen des Block (B) durch Ringöffnung des cyclischen Carbonats gebildet werden. Die Polyethergruppen des Blocks (B) resultieren durch Ringöffnung des cyclischen Carbonats und anschließende Decarboxylierung (der Carbonatgruppen) im Block (B). Das resultierende erfindungsgemäße Polyoxyalkylencarbonatpolyol weist darüber hinaus terminale Hydroxylgruppen auf. Im Falle des bevorzugten Polyethercarbonatpolyols ist dieses das Umsetzungsprodukt eines Polyetherpolyols mit einem cyclischen Carbonat in Gegenwart eines Amin-Katalysators.

In einer Ausführungsform des erfindungsgemäßen Verfahrens beträgt die zahlenmittlere Molmasse des Polyoxyalkylenpolyols, bevorzugt des Polyetherpolyols ≥ 200 g/mol, bevorzugt ≥ 1000 g/mol, besonders bevorzugt ≥ 1500 g/mol, ganz besonders bevorzugt ≥ 2000 g/mol, wobei die zahlenmittlere Molmasse mittels der im Experimentalteil offenbarten Gel-Permeations-Chromatographie (GPC) bestimmt wird.

In einer Ausführungsform des erfindungsgemäßen Verfahrens beträgt die zahlenmittlere Molmasse des Polyoxyalkylenpolyols, bevorzugt des Polyetherpolyols ≤ 30000 g/mol, bevorzugt ≤ 25000 g/mol und besonders bevorzugt ≤ 20000 g/mol und ganz besonders bevorzugt ≤ 15000 g/mol, wobei die zahlenmittlere Molmasse mittels der im Experimentalteil offenbarten Gel-Permeations-Chromatographie (GPC) bestimmt wird.

In einer Ausführungsform des erfindungsgemäßen Verfahrens beträgt die zahlenmittlere Molmasse des Polyoxyalkylenpolyols, bevorzugt des Polyetherpolyols ≥ 200 g/mol bis ≤ 30000 g/mol, bevorzugt ≥ 1000 g/mol bis ≤ 25000 g/mol besonders bevorzugt ≥ 1500 g/mol bis ≤ 20000 g/mol und ganz besonders bevorzugt ≥ 2000 g/mol bis ≤ 15000 g/mol.

Das Polyoxyalkylenpolyol, bevorzugt das Polyetherpolyol weist im Allgemeinen eine OH-Funktionalität (d.h. Anzahl an für die Polymerisation aktiven H-Atomen pro Molekül) von 2 bis 8, bevorzugt von 2 bis 6 und besonders bevorzugt von 2 bis 4 auf. Das Polyoxyalkylenpolyol bevorzugt das Polyetherpolyol kann entweder einzeln oder als Gemisch aus mindestens zwei Polyoxyalkylenpolyolen bevorzugt zwei Polyetherpolyolen eingesetzt werden.

Erfindungsgemäße Polyoxyalkylenpolyole sind Polyetherpolyole und/oder Polyethercarbonatpolyole.

In einer Ausführungsform des erfindungsgemäßen Verfahrens weist das Polyoxyalkylenpolyol bevorzugt das Polyetherpolyol einen Anteil von mindestens 75 % sekundären OH-Endgruppen bezogen auf die Summe aus primären und sekundären OH-Endgruppen auf, wobei die sekundären OH-Endgruppen mittels der im Experimentalteil offenbarten 1H-NMR-Spektroskopie bestimmt worden sind.

In einer Ausführungsform der Erfindung können die Polyoxyalkylenpolyole aus der Substanzklasse der Polyetherpolyole ausgewählt sein. Bevorzugt sind Polyetherpolyole, die aus sich wiederholenden Ethylenoxid- und Propylenoxideinheiten aufgebaut sind, bevorzugt mit einem Anteil von 50 bis 100 % Propylenoxideinheiten, besonders bevorzugt mit einem Anteil von 80 bis 100 % Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro AG (wie z.B. Desmophen® 3600Z, Desmophen® 1900U, Acclaim® Polyol 2200, Acclaim® Polyol 4000I, Arcol® Polyol 1010, Arcol® Polyol 1030, Arcol® Polyol 1070, Baycoll® BD 1110, Bayfill® VPPU 0789, Baygal® K55, Polyether® S180). Weitere geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

In einer weiteren Ausführungsform der Erfindung können die Polyoxyalkylenpolyole aus der Substanzklasse der Polyethercarbonatpolyole (z.B. cardyon® Polyole der Fa. Covestro ausgewählt sein. Insbesondere können Polyethercarbonatpolyole durch Umsetzung von Alkylenoxiden, bevorzugt Ethylenoxid, Propylenoxid oder deren Mischungen, optional weiteren Co-Monomeren mit CO2 in Gegenwart einer H-funktionellen Startersubstanz und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Cobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1) und/oder Mangan-Salen Komplexe. Eine Übersicht über die bekannten Katalysatoren für die Copolymerisation von Alkylenoxiden und CO2 gibt zum Beispiel Chemical Communications 47(2011)141-163. Durch die Verwendung unterschiedlicher Katalysatorsysteme, Reaktionsbedingungen und/oder Reaktionssequenzen erfolgt hierbei die Bildung von statistischen, alternierenden, blockartigen oder gradientenartigen Polyethercarbonatpolyolen. Diese Polyethercarbonatpolyole können hierzu in einem separaten Reaktionsschritt zuvor hergestellt werden.

In einer Ausführungsform des erfindungsgemäßen Verfahrens ist das Polyoxyalkylenpolyol ein Polyetherpolyol und/oder Polyethercarbonatpolyol bevorzugt ein Polyetherpolyol.

In einer bevorzugten Ausführungsform des erfindungsgemäßen Verfahrens ist das Polyoxyalkylenpolyol ein Polyetherpolyol, wobei das Polyetherpolyol durch Umsetzung einer H-funktionellen Startersubstanz mit Alkylenoxiden in Gegenwart eines Doppelmetallcyanid-Katalysators hergestellt worden ist. Die nach Umsetzung mit dem cyclischen Carbonat erhaltenen Produkte werden im Folgenden als Polyethercarbonatpolyole bezeichnet.

In einer Ausführungsform des erfindungsgemäßen Verfahrens beträgt die zahlenmittlere Molmasse des Polyetherpolyols ≥ 200 g/mol, bevorzugt ≥ 1000 g/mol, besonders bevorzugt ≥ 1500 g/mol, ganz besonders bevorzugt ≥ 2000 g/mol, wobei die zahlenmittlere Molmasse mittels der im Experimentalteil offenbarten Gel-Permeations-Chromatographie (GPC) bestimmt wird.

In einer Ausführungsform des erfindungsgemäßen Verfahrens beträgt die zahlenmittlere Molmasse des Polyetherpolyols ≤ 30000 g/mol, bevorzugt ≤ 25000 g/mol und besonders bevorzugt ≤ 20000 g/mol und ganz besonders bevorzugt ≤ 15000 g/mol, wobei die zahlenmittlere Molmasse mittels der im Experimentalteil offenbarten Gel-Permeations-Chromatographie (GPC) bestimmt wird.

**In** einer Ausführungsform des erfindungsgemäßen Verfahrens beträgt die zahlenmittlere Molmasse des Polyetherpolyols ≥ 200 g/mol bis ≤ 30000 g/mol, bevorzugt ≥ 1000 g/mol bis ≤ 25000 g/mol besonders bevorzugt ≥ 1500 g/mol bis ≤ 20000 g/mol und ganz besonders bevorzugt ≥ 2000 g/mol bis ≤ 15000 g/mol.

In einer weiteren bevorzugten Ausführungsform des erfindungsgemäßen Verfahrens ist das Polyoxyalkylenpolyol ein Polyethercarbonatpolyol, wobei das Polyethercarbonatpolyol durch Umsetzung einer H-funktionellen Startersubstanz mit Alkylenoxiden und Kohlenstoffdioxid in Gegenwart eines Doppelmetallcyanid-Katalysators hergestellt worden ist. Die nach Umsetzung mit dem cyclischen Carbonat erhaltenen Produkte werden im Folgenden als Polyethercarbonatpolyole bezeichnet.

In einer Ausführungsform des erfindungsgemäßen Verfahrens beträgt die zahlenmittlere Molmasse des Polyethercarbonatpolyols ≥ 200 g/mol, bevorzugt ≥ 1000 g/mol, besonders bevorzugt ≥ 1500 g/mol, ganz besonders bevorzugt ≥ 2000 g/mol, wobei die zahlenmittlere Molmasse mittels der im Experimentalteil offenbarten Gel-Permeations-Chromatographie (GPC) bestimmt wird.

In einer Ausführungsform des erfindungsgemäßen Verfahrens beträgt die zahlenmittlere Molmasse des Polyethercarbonatpolyols ≤ 30000 g/mol, bevorzugt ≤ 25000 g/mol und besonders bevorzugt ≤ 20000 g/mol und ganz besonders bevorzugt ≤ 15000 g/mol, wobei die zahlenmittlere Molmasse mittels der im Experimentalteil offenbarten Gel-Permeations-Chromatographie (GPC) bestimmt wird.

In einer Ausführungsform des erfindungsgemäßen Verfahrens beträgt die zahlenmittlere Molmasse des Polyethercarbonatpolyols ≥ 200 g/mol bis ≤ 30000 g/mol, bevorzugt ≥ 1000 g/mol bis ≤ 25000 g/mol besonders bevorzugt ≥ 1500 g/mol bis ≤ 20000 g/mol und ganz besonders bevorzugt ≥ 2000 g/mol bis ≤ 15000 g/mol.

Die in dem erfindungsgemäßen Verfahren vorzugsweise einsetzbaren DMC-Katalysatoren enthalten Doppelmetallcyanid-Verbindungen, die die Reaktionsprodukte wasserlöslicher Metallsalze und wasserlöslicher Metallcyanidsalze sind.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US- A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyoxyalkylenpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man

(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (1.) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen

sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (I) auf,

$$M(X)_n \qquad (I),$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (II) auf,

$$M_r(X)_3 \qquad (II),$$

wobei
M ausgewählt ist aus den Metallkationen $Fe^{3+}$, $Al^{3+}$, $Co^{3+}$ und $Cr^{3+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (III) auf,

$$M(X)_s \qquad (III),$$

wobei
M ausgewählt ist aus den Metallkationen $Mo^{4+}$, $V^{4+}$ und $W^{4+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (IV) auf,

$$M(X)t \qquad (IV),$$

wobei
M ausgewählt ist aus den Metallkationen $Mo^{6+}$ und $W^{6+}$,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II) sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der allgemeinen Formel (V) auf

$(Y)_aM'(CN)b(A)_c$ (V),

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VI)

$M_x[M'_{x'},(CN)_y]_z$ (VI),

worin M wie in den Formeln (I) bis (IV) und
M' wie in Formel (V) definiert ist, und
x, x', y und z ganzzahlig sind und so gewählt, dass die Elektronenneutralität der Doppelmetallcyanidverbindung gegeben ist.

Vorzugsweise ist

x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanid-Verbindungen (VI) sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanocobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanocobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung eine weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des organischen Komplexliganden gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des organischen Komplexliganden in der wässrigen Waschlösung zwischen 40 und 80 Gew.-%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus organischen Komplexliganden und weiterer komplexbildender Komponente (bevorzugt im Bereich zwischen 0,5 und 5 Gew.-%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

Als geeignete H-funktionelle Startersubstanz (Starter) können Verbindungen mit für die Alkoxylierung aktiven H-Atomen eingesetzt werden. Für die Alkoxylierung aktive Gruppen mit aktiven H-Atomen sind beispielsweise -OH. Als erfindungsgemäße H-funktionelle Startersubstanz können beispielsweise eine oder mehrere Verbindungen ausgewählt werden aus der Gruppe umfassend mehrwertige Alkohole, Polyetherpolyole und Polyethercarbonatpolyole.

Als H-funktionelle Startersubstanzen geeignete mehrwertige Alkohole sind beispielsweise zweiwertige Alkohole (wie beispielsweise Ethylenglykol, Diethylenglykol, 1,2-Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielsweise 3-Methyl-1,5-pentandiol), 1,6-Hexandiol, 1,8-Octandiol, 1,10-Decandiol, 1,12-Dodecandiol, Bis-(hydroxymethyl)cyclohexane (wie beispielsweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht $M_n$ im Bereich von 100 bis 1000 g/mol. Bevorzugt sind Polyetherpolyole, die aus sich wiederholenden Ethylenoxid- und Propylenoxideinheiten aufgebaut sind, bevorzugt mit einem Anteil von 35 bis 100 % Propylenoxideinheiten, besonders bevorzugt mit einem Anteil von 50 bis 100 % Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro AG (PET® 1004, PET® 1110N). Weitere geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen weisen im Allgemeinen eine OH-Funktionalität (d.h. Anzahl an für die Polymerisation aktiven H-Atomen pro Molekül) von 2 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Ethylenglycol, Propylenglykol, Diethylenglykol, Trimethylolpropan, Glycerin, Sorbit, Polyetherpolyole und Polyethercabonatpolyole.

In einer bevorzugten Ausführungsform des erfindungsgemäßen Verfahrens ist das Alkylenoxid Ethylenoxid und/oder Propylenoxid.

In einer bevorzugten Ausführungsform des erfindungsgemäßen Verfahrens ist der Gewichtsanteil des Propylenoxids 80 Gew.-% bis 100 Gew.-% bezogen auf die Summe der dosierten Massen des Propylenoxids und des Ethylenoxids.

Unter cyclischen Carbonaten sind gemäß des technisch-allgemeingültigen Verständnisses in der organischen Chemie heterocyclische Verbindungen zu verstehen, wobei das Carbonat ein cyclischer Ester der zweiwertigen Kohlensäure und eines mindestens difunktionellen Alkohols ist (Kohlensäureester). Technisch wird cyclisches Ethylencarbonat (1,3-Dioxolan-2-on) oder cyclisches Propylencarbonat (4-Methyl-1,3-dioxolan-2-on) beispielsweise durch Umsetzung von Kohlenstoffdioxid mit Ethylenoxid oder Propylenoxid hergestellt. Eine Zusammenstellung geeigneter cyclischer Carbonate ist in dem wissenschaftlichen Review-Artikel von G. Rodicki in Prog. Polym. Sci. 29 (2000) S. 259-342 beispielsweise in Tabelle 1 zusammengefasst.

In einer Ausführungsform des erfindungsgemäßen Verfahrens weist das cyclische Carbonat folgende Struktur gemäß Formel (VII) auf:

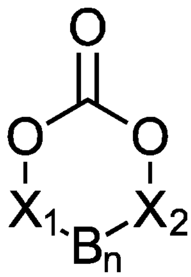

(VII)

wobei $X_1$ und/oder $X_2$ eine $CH_2$-Gruppe

B eine direkte Bindung zwischen $X_1$ und $X_2$, substituiertes Alkyl, unsubstituiertes Alkyl, substituiertes O-Alkyl, oder unsubstituiertes O-Alkyl,

und n=0, für eine direkte Bindung zwischen $X_1$ und $X_2$, sowie eine natürliche Zahl >0 für substituiertes Alkyl, unsubstituiertes Alkyl, substituiertes O-Alkyl, oder unsubstituiertes O-Alkyl ist.

Bevorzugt sind $X_1$ und $X_2$ in Formel (VII) eine $CH_2$-Gruppe und B eine direkte Bindung zwischen $X_1$ und $X_2$ und n=0, so dass cyclisches Ethylencarbonat als cyclisches Carbonat resultiert.

In einer besonders bevorzugten Ausführungsform des erfindungsgemäßen Verfahrens ist das cyclische Carbonat eine oder mehrere Verbindungen und wird ausgewählt aus der Gruppe bestehend aus 4-Methyl-1,3-dioxolan-2-on (Propylencarbonat), 1,3-Dioxolan-2-on (Ethylencarbonat), 1,3-Dioxan-2-on und 5,5-Dimethyl-1,3-dioxan-2-on , bevorzugt 1,3-Dioxolan-2-on (Ethylencarbonat).

In einer bevorzugten Ausführungsform des erfindungsgemäßen Verfahrens beträgt das molare Verhältnis

zwischen cyclischem Carbonat und den Hydroxylendgruppen des Polyoxyalkylenpolyols, bevorzugt den Hydroxylendgruppen des Polyetherpolyols 1:1 bis 20:1, bevorzugt von 3:1 bis 10:1 und besonders bevorzugt von 5:1 bis 9:1.

In einer Ausführungsform des erfindungsgemäßen Verfahrens wird die Herstellung des Polyoxyalkylencarbonatpolyols bevorzugt des Polyethercarbonatpolyols durch Umsetzung des Polyoxyalkylenpolyols, bevorzugt des Polyetherpolyols mit dem cyclischen Carbonat in Gegenwart eines Amin-Katalysators in Abwesenheit von Alkylenoxiden durchgeführt. Diese Umsetzung in Abwesenheit von Alkylenoxiden ist vorteilhaft, da kein toxisches und meist unter Reaktionsbedingungen gasförmiges Alkylenoxid, speziell Ethylenoxid verwendet werden muss, da hierdurch deutlich der Anlagenaufbau vereinfacht werden kann und umfangreiche sicherheitstechnische Vorrichtungen eingespart werden können.

In einer Ausführungsform des erfindungsgemäßen Verfahrens ist der eingesetzte Amin-Katalysator ausgewählt aus der Gruppe umfassend:

(A) Amine der allgemeinen Formel (VIII):

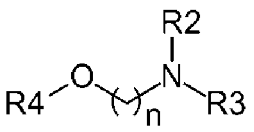

(VIII)

wobei gilt:

R2 und R3 sind unabhängig voneinander Wasserstoff, Alkyl oder Aryl; oder

R2 und R3 bilden gemeinsam mit dem sie tragenden N-Atom einen aliphatischen, ungesättigten oder aromatischen Heterozyklus;

n ist eine ganze Zahl von 1 bis 10;

R4 ist Wasserstoff, Alkyl oder Aryl; oder

R4 steht für $-(CH_2)_x-N(R41)(R42)$, wobei gilt:

R41 und R42 sind unabhängig voneinander Wasserstoff, Alkyl oder Aryl; oder

R41 und R42 bilden gemeinsam mit dem sie tragenden N-Atom einen aliphatischen, ungesättigten oder aromatischen Heterozyklus;

x ist eine ganze Zahl von 1 bis 10;

(B) Amine der allgemeinen Formel (IX):

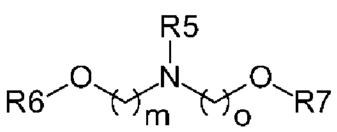

(IX)

wobei gilt:

R5 ist Wasserstoff, Alkyl oder Aryl;

R6 und R7 sind unabhängig voneinander Wasserstoff, Alkyl oder Aryl;

m und o sind unabhängig voneinander eine ganze Zahl von 1 bis 10;

und/oder:

(C) 1,8-Diazabicyclo[5.4.0]undec-7-en (DBU), 1,5,7-Triazabicyclo[4.4.0]dec-5-en (TBD), 1,4-Diazabicyclo[2.2.2]octan (DABCO), Dialkylbenzylamin, Dimethylpiperazin, 2,2'-Dimorpholinyldiethylether und/oder Pyridin.

In einer bevorzugten Ausführungsform des erfindungsgemäßen Verfahrens ist der Amin-Katalysator eine oder mehrere Verbindung(en) und wird ausgewählt aus der Gruppe bestehend aus Trimethylamin, Triethylendiamin, Tripropylamin, Tributylamin, Tripentylamin, Trihexylamin, Triphenylamin, Dimethylethylamin, N,N-Dimethylcyclohexylamin, Tetramethylendiamin, 1-Methyl-4-dimethylaminoethylpiperazin, Triethylamin, Tripopylamin, Tributylamin, Dimethylbutylamin, N,N-Dimethylbenzylamin, N,N-Dimethylcyclohexylamin, N,N',N"-Tris-(dimethylaminopropyl)hexahydrotriazin, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, Bis-(dimethylaminoethyl)-ether N-Methylmorpholin, N-Ethylmorpholin, N-Cyclohexylmorpholin, 2,3-Dimethyl-3,4,5,6-tetrahydro-pyrimidin, Triethanolamin, Diethanolamin, Triisopropanolamin, N-Methyldiethanolamin, N-Ethyldiethanolamin, Dimethylethanolamin,, 1,8-Diazabicyclo[5.4.0]undec-7-en (DBU), 1,5,7-Triazabicyclo[4.4.0]dec-5-en (TBD), 1,4-Diazabicyclo[2.2.2]octan (DABCO), Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, 4(5)Phenylimidazol und N,N-dimethylaminopyridin, Guanidin, 1,1,3,3,-Tetramethylguanidin, Pyridin, 1-Azanaphthalin (Chinolin), N-Methylpiperidin, N-Methylmorpholin, N, N'-Dimethylpiperazin und N,N-Dimethylanilin bevorzugt 1,8-Diazabicyclo[5.4.0]undec-7-en (DBU), 1,5,7-Triazabicyclo[4.4.0]dec-5-en (TBD), 1,4-Diazabicyclo [2.2.2]octan (DABCO), besonders bevorzugt 1,8-Diazabicyclo[5.4.0]undec-7-en (DBU).

In einer Ausführungsform des erfindungsgemäßen Verfahrens wird der Amin-Katalysator in einer Menge von 0,001 mol-% bis 2 mol-%, bevorzugt von 0,003 bis 1,5 mol-% und besonders bevorzugt von 0,005 bis 1,0 mol-% bezogen auf die Menge an cyclischem Carbonat eingesetzt.

Gemäß der gängigen, fachlichen Definition ist unter einem Lösungsmittel eine oder mehrere Verbindung(en) zu verstehen, die das cyclische Carbonat oder das Polyoxyalkylenpolyol bevorzugt das Polyetherpolyol und/oder den Amin-Katalysator lösen ohne jedoch selbst mit dem cyclischen Carbonat, dem Polyoxyalkylenpolyol bevorzugt dem Polyetherpolyol und/oder dem Amin-Katalysator zu reagieren.

In einer Ausführungsform wird das erfindungsgemäße Verfahren ohne Zusatz eines Lösungsmittels durchgeführt, so dass dieses nach der Herstellung des Polyoxyalkylencarbonatpolyols, bevorzugt des Polyethercarbonatpolyols nicht in einem zusätzlichen Verfahrensschritt abgetrennt werden muss. Lösungsmittelreste infolge der Herstellung des cyclischen Carbonats, des Polyoxyalkylenpolyols und/oder des Amin-Katalysators oder Lösungsmittelverunreinigungen im cyclischen Carbonat, im Polyoxyalkylenpolyol bevorzugt im Polyetherpolyol und/oder im Amin-Katalysator sind hingegen vom erfindungsgemäßen Lösungsmittelfreien Verfahren umfasst.

In einer Ausführungsform des erfindungsgemäßen Verfahrens wird die Umsetzung des Polyoxyalkylenpolyols, bevorzugt des Polyetherpolyols mit dem cyclischen Carbonat in Gegenwart des Amin-Katalysators bei Temperaturen von 50 bis 220°C, bevorzugt von 100 bis 200°C und besonders bevorzugt von 140 bis 180°C durchgeführt.

In einer Ausführungsform des erfindungsgemäßen Verfahrens wird das cyclische Carbonat kontinuierlich oder stufenweise zum Polyoxyalkylenpolyol bevorzugt zum Polyetherpyolyol zugegeben und zum Polyoxyalkylencarbonatpolyol umgesetzt (semi-batch Modus mit kontinuierlicher oder stufenweiser cyclischer Carbonatzugabe), wobei die Temperatur der Zugabe des cyclischen Carbonats und die Umsetzungstemperatur gleich ist. Hierbei kann der Amin-Katalysator mit dem Polyoxyalkylenpolyol bevorzugt mit dem Polyetherpolyol vorgelegt werden und die Mischung anschließend mit dem cyclischen Carbonat umgesetzt werden und/oder das Amin kontinuierlich oder stufenweise mit dem cyclischen Carbonat zugegeben werden. Bevorzugt wird der Amin-Katalysator mit dem Polyoxyalkylenpolyol bevorzugt mit dem Polyetherpolyol vorgelegt.

Im erfindungsgemäßen Verfahren ist unter einer kontinuierlichen Zugabe des cyclischen Carbonats ein Volumenstrom des cyclischen Carbonats von > 0 mL/min zu verstehen, wobei der Volumenstrom während dieses Schrittes konstant sein kann oder variiert (kontinuierliche cyclische Carbonatzugabe).

In einer alternativen Ausführungsform des erfindungsgemäßen Verfahrens wird das cyclische Carbonat stufenweise zum Polyoxyalkylenpolyol bevorzugt zum Polyetherpolyol zugegeben und anschließend zum Polyoxyalkylencarbonatpolyol bevorzugt zum Polyethercarbonatpolyol umgesetzt (stufenweise cyclische Carbonatzugabe).

Im erfindungsgemäßen Verfahren ist unter einer stufenweisen Zugabe des cyclischen Carbonats mindestens die Zugabe der Gesamtmenge des cyclischen Carbonats in zwei oder mehr diskreten Portionen des cyclischen Carbonats zu verstehen, wobei der Volumenstrom des cyclischen Carbonats zwischen den zwei oder mehr diskreten Portionen 0 mL/min beträgt und wobei der Volumenstrom des cyclischen Carbonats während einer diskreten Portion konstant sein kann oder variiert, aber > 0 mL/min ist.

In einer alternativen Ausführungsform wird das Polyoxyalkylenpolyol bevorzugt das Polyetherpolyol und das cyclische Carbonat gemischt und anschließend die Mischung zum Polyoxyalkylencarbonatpolyol, bevorzugt zum Polyethercarbonatpolyol umgesetzt, wobei die Mischtemperatur niedriger ist als die Umsetzungstemperatur (batch-Modus). Hierbei kann der Amin-Katalysator mit dem Polyoxyalkylenpolyol, bevorzugt dem Polyetherpolyol und dem cyclischen Carbonat vorgelegt werden und die Mischung anschließend zum Polyoxyalkylencarbonatpolyol, bevorzugt zum Polyethercarbonatpolyol umgesetzt werden und/oder das Amin kontinuierlich oder stufenweise zugegeben werden. Bevorzugt wird der Amin-Katalysator mit dem Polyoxyalkylenpolyol, bevorzugt mit dem Polyetherpolyol und dem

cyclischen Carbonat vorgelegt.

In einer weiteren, alternativen Ausführungsform werden das Polyoxyalkylenpolyol, bevorzugt das Polyetherpolyol das cyclische und der Amin-Katalysator kontinuierlich vermischt und miteinander zur Reaktion gebracht, während kontinuierlich das Polyoxyalkylencarbonatpolyol-Produkt, bevorzugt das Polyethercarbonatpolyol-Produkt abgeführt wird, beispielsweise in einem Rohrreaktor oder einem kontinuierlichen Rührkesselreaktor (engl. continous stirred tank reactor), was einem vollkontinuierlichen Herstellungsverfahren für das Polyoxyalkylencarbonatpolyol bevorzugt für das Polyethercarbonatpolyol entspricht (Vollconti-Modus).

Ein weiterer Gegenstand der vorliegenden Erfindung ist ein Polyethercarbonatpolyol, erhältlich nach dem erfindungsgemäßen Verfahren umfassend einen Polyether Block (A) und mindestens einen Polyethercarbonat Block (B), wobei der Gewichtsanteil an CO2 im Polyethercarbonatpolyol ≤ 4 Gew-%, bevorzugt ≤ 3 Gew.-% beträgt und wobei das Polyethercarbonatpolyol einen Anteil von ≥ 65 % primären OH-Endgruppen bezogen auf die Summe aus primären und sekundären OH-Endgruppen aufweist, wobei die primären OH-Endgruppen und der Gewichtsanteil an CO2 mittels der im Experimentalteil offenbarten 1H-NMR-Spektroskopie bestimmt worden sind.

Ein weiterer Gegenstand der vorliegenden Erfindung ist ein Verfahren zur Herstellung eines Polyurethans durch Umsetzung des erfindungsgemäßen Polyethercarbonatpolyols mit einem Polyisocyanat.

Das Polyisocyanat kann ein aliphatisches oder aromatisches Polyisocyanat sein. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

## Beispiele

Die vorliegende Erfindung wird anhand der nachfolgenden Figuren und Beispiele näher erläutert, ohne jedoch darauf beschränkt zu sein.

*Verwendete Ausgangsstoffe*

Cyclische Carbonate

1,3-Dioxolan-2-on (99+ %, Acros Organics)

Katalysatoren

1,8-Diazabicyclo[5.4.0]undec-7-en (DBU) (98 %, Aldrich Chemistry)

1,5,7-Triazabicyclo[4.4.0]dec-5-en (TBD) (98 %, Aldrich Chemistry)

DMC - Katalysator hergestellt gemäß Beispiel 6 in WO 01/80994 A1

Kaliumorthovanadat ($K_3VO_4$) (99,9 %, Alfa Aesar)

Polyoxyalkylenpolyol (Polyetherpolyol)

Die Herstellung des Polyetherpolyols A erfolgte mittels DMC-Katalyse wie folgt:
In einem 20 L Druckreaktor wurden 1739,3 g eines Poly(oxypropylen)triols mit einer OH-Zahl von 233 mg KOH/g sowie 0,367 g DMC-Katalysator (hergestellt gemäß Beispiel 6 in WO 01/80994 A1) unter Stickstoff vorgelegt. Der Reaktor wurde auf 130°C aufgeheizt, durch dreimalige Evakuierung auf 100 mbar (absolut) und wiederholtes Beaufschlagen von

Stickstoff inertisiert und dann für 30 min bei 100 mbar und 130°C unter Durchleiten von Stickstoff gestrippt. Anschließend wurde bei 130°C innerhalb von drei Stunden ein Gemisch von 9256 g Propylenoxid und 1028 g Ethylenoxid zudosiert. Nach einer Nachreaktionszeit bei 130°C bis zur Druckkonstanz im Reaktor wurden leichtflüchtige Anteile bei 90°C für 30 min im Vakuum abdestilliert und das Reaktionsgemisch anschließend auf Raumtemperatur abgekühlt. Die OH-Zahl des Produktes lag bei 34,3 mg KOH/g, die Viskosität bei 974 mPa*s, das Zahlenmittel $M_n$ des Molekulargewichts bei 6665 g/mol, die Polydispersität bei 1,03 und der Anteil primärer Hydroxyendgruppen bei 18 %.

*Beschreibung der Methoden:*

Gel-Permeations-Chromatographie (GPC):

Das Zahlenmittel $M_n$, das Gewichtsmittel $M_w$ des Molekulargewichts und die Polydispersität ($M_w/M_n$) der Produkte wurde mittels Gel-Permeations-Chromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2xPSS SDV linear M, 8x300 mm, 5μm; RID-Detektor). Dabei wurden Polystyrolproben bekannter Molmasse zur Kalibrierung verwendet.

$^1$H- und $^{13}$C-NMR-Spektroskopie

Bestimmung des molaren Anteils der primären OH-Gruppen: mittels $^1$H- (Bruker AV III HD 600, 600 MHz, Deuterochloroform) oder $^{13}$C-NMR (Bruker AV III HD 600, 151 MHz, Deuterochloroform):
Zur Bestimmung des Gehaltes an primären OH-Gruppen wurden die Polyol-Proben zunächst peracetyliert.
Dabei wurde folgendes Peracetylierungsgemisch angesetzt:

9,4 g Essigsäureanhydrid p.A.
1,6 g Essigsäure p.A.
100 mL Pyridin p.A.

Für die Peracetylierungsreaktion wurden 10 g Polyol (Polyoxyalkylenpolyol oder Polyoxyalkylencarbonatpolyol) in einem 300 mL-Schlifferlenmeyerkolben eingewogen. Das Volumen an Peracetylierungsgemisch richtete sich nach der OH-Zahl des zu peracetylierenden Polyols, wobei (jeweils bezogen auf 10 g Polyol) die OH-Zahl des Polyols aufgerundet wird auf die nächste 10er-Stelle; Pro 10 mg KOH/g werden dann 10 mL an Peracetylierungsgemisch zugesetzt. Beispielsweise wurden der Probe von 10 g eines Polyols mit einer OH-Zahl von 45,1 mg KOH/g entsprechend 50 mL Peracetylierungsgemisch zugesetzt.
Nach der Zugabe von Siedeperlen aus Glas wurde der Schlifferlenmeyerkolben mit einem Steigrohr (Luftkühler) versehen und die Probe 75 min bei schwachem Rückfluss gekocht. Das Probengemisch wurde dann in einen 500 mL-Rundkolben überführt und über einen Zeitraum von 30 min bei 80°C und 10 mbar (absolut) wurden flüchtige Bestandteile (im wesentlichen Pyridin, Essigsäure und überschüssiges Essigsäureanhydrid) abdestilliert. Der Destillationsrückstand wurde anschließend dreimal mit je 100 ml Cylcohexan (alternativ wurde Toluol eingesetzt in den Fällen, in denen sich der Destillationsrückstand in Cylcohexan nicht löste) versetzt und flüchtige Bestandteile der Probe eine Stunde bei 100°C und 10 mbar (absolut) entfernt.
Zur Bestimmung der molaren Anteile an primären und sekundären OH-Endgruppen im Polyol wurde die so vorbereitete Probe in deuteriertem Chloroform gelöst und mittels $^1$H-NMR (Firma Bruker AV III HD 600, 600 MHz) oder $^{13}$C-NMR (Firma Bruker AV III HD 600, 151 MHz) untersucht. Die relevanten Resonanzen im $^1$H-NMR (bezogen auf TMS = 0 ppm) sind wie folgt:

Methylsignal einer peracetylierten sekundären OH-Endgruppe: 2.04 ppm
Methylsignal einer peracetylierten primären OH-Endgruppe: 2.08 ppm

Der molare Anteil der sekundären und primären OH-Endgruppen ergibt sich dann wie folgt:

$$\text{Anteil sekundärer OH-Endgruppen (CH-OH)} = F\,(2.04) / (F\,(2.04) + F\,(2.08)) \cdot 100\ \% \qquad (X)$$

$$\text{Anteil primärer OH-Endgruppen (CH}_2\text{-OH)} = F\,(2.08) / (F\,(2.04) + F\,(2.08)) \cdot 100\ \% \qquad (XI)$$

In den Formeln (X) und (XI) steht F für die Fläche der Resonanz bei 2.04 ppm bzw. 2.08 ppm.
Die relevanten Resonanzen im $^{13}$C-NMR (bezogen auf TMS = 0 ppm) sind wie folgt:

Methylsignal einer peracetylierten sekundären OH-Endgruppe: 21.3 ppm
Methylsignal einer peracetylierten primären OH-Endgruppe: 20.9 ppm

Der molare Anteil der sekundären und primären OH-Endgruppen ergibt sich dann wie folgt:

Anteil sekundärer OH-Endgruppen (CH-OH) = F (21.3) / (F (21.3) + F (20.9)) · 100 % (XII)

Anteil primärer OH-Endgruppen ($CH_2$-OH) = F (20.9) / (F (21.3) + F (20.9)) · 100 % (XIII)

In den Formeln (XII) und (XIII) steht F für die Fläche der Resonanz bei 21.3 ppm bzw. 20.9 ppm.

Die Bestimmung der relativen Zusammensetzung der Polyoxyalkylencarbonatpolyole, erfolgte mittels 1H- NMR (Bruker AV III HD 600, 600 MHz, Deuterochloroform). Die relevanten Resonanzen im 1H-NMR Spektrum (bezogen auf TMS = 0 ppm) sind wie folgt:

Für verbleibendes 1,3-Dioxolan-2-on: Signal bei 4,53 ppm
Für verbleibendes 4-Methyl-1,3-dioxolan-2-on: Signal bei 1,51-1,49 ppm
Für im Polyoxyalkylencarbonatpolyol eingebaute lineare Propylcarbonat-Einheiten: Resonanzen bei 4,8-4,95 ppm
Für im Polyoxyalkylencarbonatpolyol eingebaute lineare Ethylencarbonat-Einheiten: Resonanzen bei 4,2-4,35 ppm
Für im Polyoxyalkylencarbonatpolyol enthaltene Polypropylenoxid-Einheiten: Resonanzen bei 1,1 ppm
Für im Polyoxyalkylencarbonatpolyol enthaltene Polyethylenoxid-Einheiten: Die restlichen Signal-Anteile im Bereich 3,0 - 4,2 ppm

Die Gewichtsanteile (in Gew.-%) der Komponenten in der Reaktionsmischung werden nach den Formeln (XIV) bis (XIX) wie folgt berechnet:
Nicht umgesetztes 1,3-Dioxolan-2-on (cEC):

$$cEC_{gew.\%} = \frac{[F(4,53)]}{4} \cdot \frac{88}{N} \cdot 100\,\% \qquad \text{(XIV)}$$

Nicht umgesetztes 4-Methyl-1,3-dioxolan-2-on (cPC):

$$cPC_{gew.\%} = \frac{[F(1,51-1,49)]}{3} \cdot \frac{102}{N} \cdot 100\,\% \qquad \text{(XV)}$$

Polymer-gebundene lineare Propylencarbonat-Einheiten (lPC):

$$lPC_{gew.\%} = \left[F(4,8-4,95) - \frac{[F(1,51-1,49)]}{3}\right] \cdot \frac{102}{N} \cdot 100\,\% \qquad \text{(XVI)}$$

Polymer-gebundene lineare Ethylencarbonat-Einheiten (lEC):

$$lEC_{gew.\%} = \frac{[F(4,2-4,35)]}{4} \cdot \frac{88}{N} \cdot 100\,\% \qquad \text{(XVII)}$$

Polymer-gebundene Polypropylenoxid-Einheiten (PPO):

$$PPO_{gew.\%} = \frac{[F(1,1)]}{3} \cdot \frac{58}{N} \cdot 100\,\% \qquad \text{(XVIII)}$$

Polymer-gebundene Polyethylenoxid-Einheiten (PEO):

$$PEO_{gew.\%} = \frac{[F(3,0-4,2) - F(1,1) - F(1,51-1,49) - 2 \cdot F(4,8-4,95)]}{4} \cdot \frac{44}{N} \cdot 100\ \% \qquad (XIX)$$

wobei sich der Wert für *N* ("Nenner" *N*) nach Formel (XX) berechnet:

$$N = \frac{[F(4,53)]}{4} \cdot 88 + \frac{F(1,51-1,49)}{3} \cdot 102 + \left[F(4,8-4,95) - \frac{[F(1,51-1,49)]}{3}\right] \cdot 102 + \frac{[F(4,2-4,35)]}{4} \cdot 88 + \frac{[F(1,1)]}{3} \cdot 58 + \frac{[F(3,0-4,2) - F(1,1) - F(1,51-1,49) - 2 \cdot F(4,8-4,95)]}{4} \cdot 44 \qquad (XX)$$

und folgende Abkürzungen verwendet werden:

| | |
|---|---|
| F(4,53) | = Fläche der Resonanz bei 4,53 ppm für 1,3-Dioxolan-2-on (entspricht vier Protonen) |
| F(1,51-1,49) | = Fläche der Resonanz bei 1,51-1,49 ppm für 4-Methyl-1,3-dioxolan-2-on (entspricht drei Protonen) |
| F(4,8-4,95) | = Fläche der Resonanz bei 4,8-4,95 ppm für lineare Propylencarbonat-Einheiten im Polyoxyalkylencarbonatpolyol (entspricht einem Proton) |
| F(4,2-4,35) | = Fläche der Resonanz bei 4,2-4,35 ppm für lineare Ethylencarbonat-Einheiten im Polyoxyalkylencarbonatpolyol (entspricht vier Protonen) |
| F(1,1) | = Fläche der Resonanz bei 1,1 ppm für Polypropylenoxid-Einheiten im Polyoxyalkylencarbonatpolyol (entspricht drei Protonen) |
| F(3,0-4,2) | = Fläche der restlichen Signal-Anteile im Bereich 3,0-4,2 ppm für Polyethylenoxid-Einheiten im Polyoxyalkylencarbonatpolyol (entspricht vier Protonen) |

Unter Berücksichtigung der relativen Intensitäten wurde gemäß der folgenden Formel (XXI) der Gewichtsanteil (in Gew.-%) an $CO_2$ im Polyoxyalkylencarbonatpolyol ($CO_2$ gew.%) berechnet:

$$CO_{2\,gew.\%} = \frac{\left[lEC_{gew.\%} \cdot \frac{44}{88} + lPC_{gew.\%} \cdot \frac{44}{102}\right]}{P} * 100\ \% \qquad (XXI)$$

wobei sich der Wert für $P_{gew.\%}$ ("Polymer" P) nach Formel (XXII) berechnet und den Polymer-Anteil (d.h. Gewichtsanteil des Polyoxyalkylencarbonatpolyols) (in Gew.-%) in der Reaktionsmischung widerspiegelt:

$$P_{gew.\%} = lEC_{gew.\%} + lPC_{gew.\%} + PPO_{gew.\%} + PEO_{gew.\%} \qquad (XXII)$$

In Formel (XXI) resultiert der Faktor 44 aus der Molmasse von Ethylenoxid (Molmasse 44 g/mol), der Faktor 88 aus der Summe der Molmassen von $CO_2$ (Molmasse 44 g/mol) und der von Ethylenoxid, der Faktor 102 aus der Summe der Molmassen von $CO_2$ und der von Propylenoxid (Molmasse 58 g/mol),

OH-Zahlen

Die Bestimmung der OH-Zahlen erfolgte gemäß der Vorschrift der DIN 53240.

Viskosität

Die Bestimmung der Viskosität wurden mittels Rotationsviskosimeter (Physica MCR 51, Hersteller: Anton Paar) nach der Vorschrift der DIN 53018 ermittelt.

**Beispiel 1:**

In einem 500-Milliliter Dreihalskolben (ausgestattet mit Rückflusskühler, Thermofühler, Stickstoffzuleitung und Gasaustritt/Gasabfuhr mit Blasenzähler) wurden 200 g des Polyetherpolyols A vorgelegt und auf 100°C erhitzt. Anschließend wurden 75,4 g 1,3-Dioxolan-2-on (molares Verhältnis 1,3-Dioxolan-2-on/ Hydroxylendgruppen des Polyetherpolyols A: 7 / 1) hinzugegeben und der Gasraum im Kolben für 20 Minuten bei 100°C mit Stickstoff gespült. Im Anschluss wurden 0,65 g 1,8-Diazabicyclo[5.4.0]undec-7-en (DBU) (0,5 mol-% bezogen auf die Menge des eingesetzten 1,3-Dioxolan-2-on) hinzugegeben und das Gemisch stufenweise auf 170°C aufgeheizt. Der entstehende Gasstrom wurde über einen an den Rückflusskühler angeschlossenen Blasenzähler beobachtet und abgelassen. Das Reaktionsgemisch wurde 5 Stunden bei 170°C gerührt und anschließend auf Raumtemperatur abgekühlt. Die OH-Zahl des

Produkts beträgt 34 mg KOH/g, die Viskosität 5470 mPa*s und der Anteil primärer Hydroxylendgruppen 71 %. Per NMR-Spektroskopie wurde ein Gewichtsanteil an $CO_2$ im Polyoethercarbonatpolyol von 2,44 Gew.-% bestimmt.

**Beispiel 2:**

In einem 500-Milliliter Dreihalskolben (ausgestattet mit Rückflusskühler, Tropftrichter, Thermofühler, Stickstoffzuleitung und Gasaustritt/Gasabfuhr mit Blasenzähler) wurden 200 g des Polyetherpolyols A vorgelegt, auf 130°C erhitzt und der Gasraum im Kolben für 20 Minuten mit Stickstoff gespült. Es wurden 0,65 g 1,8-Diazabicyclo[5.4.0]undec-7-en (DBU) (0,5 mol-% bezogen auf die Menge des eingesetzten 1,3-Dioxolan-2-on) hinzugegeben und anschließend mittels Tropftrichter 75,4 g 1,3-Dioxolan-2-on (molares Verhältnis 1,3-Dioxolan-2-on/ Hydroxylendgruppen des Polyetherpolyols A: 7 / 1) hinzugegeben (ca. 15 g/h). Mit Beginn der Zugabe des 1,3-Dioxolan-2-ons wurde das Reaktionsgemisch auf 170°C erhitzt und bei 170°C für 5 Stunden gerührt. Der entstehende Gasstrom wurde über einen an den Rückflusskühler angeschlossenen Blasenzähler beobachtet und abgelassen. Anschließend wurde das Reaktionsgemisch auf Raumtemperatur abgekühlt. Die OH-Zahl des Produkts beträgt 31 mg KOH/g, die Viskosität 4175 mPa*s und der Anteil primärer Hydroxylendgruppen 72 %. Per NMR-Spektroskopie wurde ein Gewichtsanteil an $CO_2$ im Polyethercarbonatpolyol von 2,01 Gew.-% bestimmt.

**Beispiel 3:**

In einem 500-Milliliter Dreihalskolben (ausgestattet mit Rückflusskühler, Thermofühler, Stickstoffzuleitung und Gasaustritt/Gasabfuhr mit Blasenzähler) wurden 200 g des Polyetherpolyols A vorgelegt, auf 130°C erhitzt. Anschließend wurden 75,4 g 1,3-Dioxolan-2-on (molares Verhältnis 1,3-Dioxolan-2-on/ Hydroxyendgruppen des Polyetherpolyols A: 7 / 1) und 0,65 g 1,8-Diazabicyclo[5.4.0]undec-7-en (DBU) (0,5 mol-% bezogen auf die Menge des eingesetzten 1,3-Dioxolan-2-on) hinzugegeben. Das Reaktionsgemisch wurde unter Durchleiten von Stickstoff stufenweise auf 170°C aufgeheizt, 5 Stunden bei 170°C unter Durchleiten von Stickstoff gerührt und anschließend auf Raumtemperatur abgekühlt. Die OH-Zahl des Produkts beträgt 33 mg KOH/g, die Viskosität 7550 mPa*s und der Anteil primärer Hydroxylendgruppen 73 %. Per NMR-Spektroskopie wurde ein Gewichtsanteil an $CO_2$ im Polyethercarbonatpolyol von 2,38 Gew.-% bestimmt.

**Beispiel 4:**

In einem 500-Milliliter Dreihalskolben (ausgestattet mit Rückflusskühler, Tropftrichter, Thermofühler, Stickstoffzuleitung und Gasaustritt/Gasabfuhr mit Blasenzähler) wurden 200 g des Polyetherpolyols A vorgelegt und auf 130°C erhitzt. Anschließend wurden 0,65 g 1,8-Diazabicyclo[5.4.0]undec-7-en (DBU) (0,5 mol-% bezogen auf die Menge des eingesetzten 1,3-Dioxolan-2-on) hinzugegeben und mittels Tropftrichter 75,4 g 1,3-Dioxolan-2-on (molares Verhältnis 1,3-Dioxolan-2-on/ Hydroxylendgruppen des Polyetherpolyols A: 7 / 1) zugegeben (ca. 15 g/h). Mit Beginn der Zugabe des 1,3-Dioxolan-2-ons wurde das Reaktionsgemisch unter Durchleiten von Stickstoff auf 170°C erhitzt und bei 170°C für 5 Stunden unter Durchleiten von Stickstoff gerührt. Anschließend wurde das Reaktionsgemisch auf Raumtemperatur abgekühlt. Die OH-Zahl des Produkts beträgt 29 mg KOH/g, die Viskosität 6225 mPa*s und der Anteil primärer Hydroxylendgruppen 72 %. Per NMR-Spektroskopie wurde ein Gewichtsanteil an $CO_2$ im Polyethercarbonatpolyol von 1,99 Gew.-% bestimmt.

**Beispiel 5:**

In einem 500-Milliliter Dreihalskolben (ausgestattet mit Rückflusskühle und Thermofühler) wurden 200 g des Polyetherpolyols A vorgelegt und auf 130°C erhitzt. Anschließend wurden 75,4 g 1,3-Dioxolan-2-on (molares Verhältnis 1,3-Dioxolan-2-on/ Hydroxylendgruppen des Polyetherpolyols A: 7 / 1) und 0,65 g 1,8-Diazabicyclo[5.4.0]undec-7-en (DBU) (0,5 mol-% bezogen auf die Menge des eingesetzten 1,3-Dioxolan-2-on) hinzugegeben. Das Reaktionsgemisch wurde bei 700 mbar stufenweise auf 170°C aufgeheizt, 5 Stunden bei 170°C und 700 mbar gerührt und anschließend auf Raumtemperatur abgekühlt. Die OH-Zahl des Produkts beträgt 31 mg KOH/g, die Viskosität 7450 mPa*s und der Anteil primärer Hydroxylendgruppen 73 %. Per NMR-Spektroskopie wurde ein Gewichtsanteil an $CO_2$ im Polyethercarbonatpolyol von 2,50 Gew.-% bestimmt.

**Beispiel 6:**

In einem 500-Milliliter Dreihalskolben (ausgestattet mit Rückflusskühler, Thermofühler, Stickstoffzuleitung und Gasaustritt/Gasabfuhr mit Blasenzähler) wurden 200 g des Polyetherpolyols A vorgelegt und auf 130°C erhitzt. Anschließend wurden 75,4 g 1,3-Dioxolan-2-on (molares Verhältnis 1,3-Dioxolan-2-on/ Hydroxyendgruppen des Polyetherpolyols A: 7 / 1) hinzugegeben und der Gasraum im Kolben für 20 Minuten bei 130°C mit Stickstoff gespült. Im Anschluss wurden 0,60 g 1,5,7-Triazabicyclo[4.4.0]dec-5-en (TBD) (0,5 mol-% bezogen auf die Menge des eingesetzten 1,3-Dioxolan-2-on) hinzugegeben und das Gemisch stufenweise auf 170°C aufgeheizt. Der entstehende Gasstrom wurde über einen an den Rückflusskühler angeschlossenen Blasenzähler beobachtet und abgelassen. Das Reaktionsgemisch wurde 5 Stunden bei 170°C gerührt und anschließend auf Raumtemperatur abgekühlt. Die OH-Zahl des Produkts beträgt 32 mg KOH/g, die Viskosität 6975 mPa*s und der Anteil primärer Hydroxylendgruppen 73 %. Per NMR-Spektroskopie wurde ein Gewichtsanteil an $CO_2$ im Polyethercarbonatpolyol von 2,30 Gew.-% bestimmt.

**Beispiel 7 (Vergleichsbeispiel ):**

In einem 2-Liter Edelstahlreaktor wurden 200 g des Polyetherpolyols A vorgelegt und auf 130°C erhitzt. Der Reaktor wurde durch dreimalige Evakuierung auf 100 mbar (absolut) und wiederholtes Beaufschlagen von Stickstoff inertisiert. Es wurden 75,0 g 1,3-Dioxolan-2-on (molares Verhältnis 1,3-Dioxolan-2-on/ Hydroxylendgruppen des Polyetherpolyols A: 7 / 1) hinzugegeben und das Reaktionsgemisch 5 Stunden bei 170°C gerührt. Der entstehende Gasstrom wurde über einen an den Reaktor angeschlossenen Blasenzähler beobachtet und abgelassen. Anschließend wurde das Reaktionsgemisch auf Raumtemperatur abgekühlt. Die OH-Zahl des Produkts beträgt 31 mg KOH/g, die Viskosität (bei 50 °C) 236 mPa*s und der Anteil primärer Hydroxylendgruppen 12 %. Per NMR-Spektroskopie wurde ein Gewichtsanteil an $CO_2$ im Polyethercarbonatpolyol von 0,36 Gew.-% bestimmt.

**Beispiel 8 (Vergleichsbeispiel ):**

In einem 2-Liter Edelstahlreaktor wurden 200 g des Polyetherpolyols A vorgelegt und auf 130°C erhitzt. Der Reaktor wurde durch dreimalige Evakuierung auf 100 mbar (absolut) und wiederholtes Beaufschlagen von Stickstoff inertisiert. Es wurden 75,0 g 1,3-Dioxolan-2-on (molares Verhältnis 1,3-Dioxolan-2-on/ Hydroxylendgruppen des Polyetherpolyols A: 7 / 1) hinzugegeben und das Gemisch auf 170°C erwärmt. Es wurden 130 g Propylenoxid hinzugegeben und das Reaktionsgemisch 5 Stunden bei 170°C gerührt. Anschließend wurde das Reaktionsgemisch auf Raumtemperatur abgekühlt. Die OH-Zahl des Produkts beträgt 24 mg KOH/g, die Viskosität 2510 mPa*s und der Anteil primärer Hydroxylendgruppen 17 %. Per NMR-Spektroskopie wurde ein Gewichtsanteil an $CO_2$ im Polyethercarbonatpolyol von 0,51 Gew.-% bestimmt.

**Beispiel 9 (Vergleichsbeispiel ):**

In einem 500-Milliliter Dreihalskolben (ausgestattet mit Rückflusskühler, Thermofühler, Stickstoffzuleitung und Gasaustritt/Gasabfuhr mit Blasenzähler) wurden 200 g des Polyetherpolyols A vorgelegt und auf 120°C erhitzt. Anschließend wurden 75,4 g 1,3-Dioxolan-2-on (molares Verhältnis 1,3-Dioxolan-2-on/ Hydroxylendgruppen des Polyetherpolyols A: 7 / 1) hinzugegeben und der Gasraum im Kolben für 20 Minuten bei 120°C mit Stickstoff gespült. Im Anschluss wurden 0,99 g Kaliumorthovanadat ($K_3VO_4$) (0,5 mol-% bezogen auf die Menge des eingesetzten 1,3-Dioxolan-2-on) hinzugegeben und das Gemisch stufenweise auf 170°C aufgeheizt. Der entstehende Gasstrom wurde über einen an den Rückflusskühler angeschlossenen Blasenzähler beobachtet und abgelassen. Das Reaktionsgemisch wurde 5 Stunden bei 170°C gerührt und anschließend auf Raumtemperatur abgekühlt. Die OH-Zahl des Produkts beträgt 40 mg KOH/g, die Viskosität 12750 mPa*s und der Anteil primärer Hydroxylendgruppen 76 %. Per NMR-Spektroskopie wurde ein Gewichtsanteil an $CO_2$ im Polyethercarbonatpolyol von 4,26 Gew.-% bestimmt.

Tabelle 1: Vergleich der Versuche 1 bis 9.

| Versuch | Polyoxyalkylenpolyol | Carbonat a) | Alkylen-oxid b) | Katalysator c) | x(Kat) [mol-%] d) | Carbonat/ Hydroxylend gruppen [mol/mol] | Zugabe Carbonat e) | OH-Zahl [mg KOH/g] | Viskosität (25°C) [mPa*s] | Primäre OH [%] | $CO_2$ im Polyethercar bonatpolyol [Gew.-%] |
|---|---|---|---|---|---|---|---|---|---|---|---|
| 1 | Polyetherpolyol A | EC | - | DBU | 0,5 | 7 | batch | 34 | 5470 | 71 | 2,44 |
| 2 | Polyetherpolyol A | EC | - | DBU | 0,5 | 7 | conti | 31 | 4175 | 72 | 2,01 |
| 3 | Polyetherpolyol A | EC | - | DBU | 0,5 | 7 | batch | 33 | 7550 | 73 | 2,38 |
| 4 | Polyetherpolyol A | EC | - | DBU | 0,5 | 7 | conti | 29 | 6225 | 72 | 1,99 |
| 5 | Polyetherpolyol A | EC | - | DBU | 0,5 | 7 | batch | 31 | 7450 | 73 | 2,50 |
| 6 | Polyetherpolyol A | EC | - | TBD | 0,5 | 7 | batch | 32 | 6975 | 73 | 2,30 |
| 7 (Vgl.) | Polyetherpolyol A | EC | - | $DMC_{akt}$ | - | 7 | batch | 31 | 236 (50°C) | 12 | 0,36 |
| 8 (Vgl.) | Polyetherpolyol A | EC | PO | $DMC_{akt}$ | - | 7 | batch f) | 24 | 2510 | 17 | 0,51 |
| 9 (Vgl.) | Polyetherpolyol A | EC | - | $K_3VO_4$ | 0,5 | 7 | batch | 40 | 12750 | 76 | 4,26 |

a) 1,3-Dioxolan-2-on (Ethylencarbonat, EC) b) Propylenoxid (PO) c)1,8-Diazabicyclo[5.4.0]undec-7-en (DBU), 1,5,7-Triazabicyclo[4.4.0]dec-5-en (TBD); aus der Herstellung des Polyetherpolyols A enthaltener DMC-Katalysator ($DMC_{akt}$), Kaliumorthovanadat ($K_3VO_4$) d) bezogen auf die eingesetzte Menge Carbonat e) Carbonatzugabe: batch-Modus (batch); semi-batch Modus mit kontinuierlicher Carbonatzugabe (conti); f) Carbonatzugabe im batch-Modus (batch) mit kontinuierlicher Zugabe des Alkylenoxids (entspricht Lehre von WO2013/028437 A1)

**Patentansprüche**

1. Verfahren zur Herstellung eines Polyoxyalkylencarbonatpolyols, bevorzugt eines Polyethercarbonatpolyols, durch Umsetzung eines Polyoxyalkylenpolyols bevorzugt eines Polyetherpolyols, mit einem cyclischen Carbonat in Gegenwart eines Amin-Katalysators.

2. Verfahren gemäß Anspruch 1, wobei die zahlenmittlere Molmasse des Polyoxyalkylenpolyols bevorzugt des Polyetherpolyols ≥ 200 g/mol, bevorzugt ≥ 1000 g/mol, besonders bevorzugt ≥ 1500 g/mol, ganz besonders bevorzugt ≥ 2000 g/mol beträgt wobei die zahlenmittlere Molmasse mittels der im Experimentalteil offenbarten Gel-Permeations-Chromatographie (GPC) bestimmt wird.

3. Verfahren gemäß Anspruch 1 oder 2, wobei das molare Verhältnis zwischen cyclischem Carbonat und den Hydroxylendgruppen des Polyoxyalkylenpolyols, bevorzugt den Hydroxylendgruppen des Polyetherpolyols von 1:1 bis 20:1, bevorzugt von 3:1 bis 10:1 und besonders bevorzugt von 5:1 bis 9:1 beträgt.

4. Verfahren gemäß einem der Ansprüche 1 bis 3, wobei die Herstellung des Polyoxyalkylencarbonatpolyols bevorzugt des Polyethercarbonatpolyols, in Abwesenheit eines Alkylenoxids erfolgt.

5. Verfahren gemäß einem der Ansprüche 1 bis 4, wobei das cyclische Carbonat eine oder mehrere Verbindungen ist und ausgewählt wird aus der Gruppe bestehend aus 4-Methyl-1,3-dioxolan-2-on, 1,3-Dioxolan-2-on, 1,3-Dioxan-2-on und 5,5-Dimethyl-1,3-dioxan-2-on, bevorzugt 1,3-Dioxolan-2-on.

6. Verfahren gemäß einem der Ansprüche 1 bis 5, wobei der Amin- Katalysator eine oder mehrere Verbindung(en) ist und ausgewählt wird aus der Gruppe bestehend aus Trimethylamin Triethylendiamin, Tripropylamin, Tributylamin, Tripentylamin, Trihexylamin, Triphenylamin, Dimethylethylamin, N,N-Dimethylcyclohexylamin, Tetramethylendiamin, 1-Methyl-4-dimethylaminoethylpiperazin, Triethylamin, Tripopylamin, Tributylamin, Dimethylbutylamin, N,N-Dimethylbenzylamin, N,N-Dimethylcyclohexylamin, N,N',N"-Tris-(dimethylaminopropyl)hexahydrotriazin, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, Bis-(dimethylaminoethyl)-ether N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin, Dimethylethanolamin,, 1,8-Diazabicyclo [5.4.0]undec-7-en (DBU), 1,5,7-Triazabicyclo[4.4.0]dec-5-en (TBD), 1,4-Diazabicyclo[2.2.2]octan (DABCO), Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, 4(5)Phenylimidazol und N,N-dimethylaminopyridin, Guanidin, 1,1,3,3,-Tetramethylguanidin, Pyridin, 1-Azanaphthalin (Chinolin), N-Methylpiperidin, N-Methylmorpholin, N, N'-Dimethylpiperazin und N,N-Dimethylanilin bevorzugt 1,8-Diazabicyclo[5.4.0]undec-7-en (DBU), 1,5,7-Triazabicyclo[4.4.0]dec-5-en (TBD), 1,4-Diazabicyclo[2.2.2]octan (DABCO), besonders bevorzugt 1,8-Diazabicyclo[5.4.0]undec-7-en (DBU).

7. Verfahren gemäß einem der Ansprüche 1 bis 6, wobei das Polyoxyalkylenpolyol bevorzugt das Polyetherpolyol einen Anteil von mindestens 75 % sekundären OH-Endgruppen bezogen auf die Summe aus primären und sekundären OH-Endgruppen aufweist, wobei die sekundären OH-Endgruppen mittels der im Experimentalteil offenbarten $^1$H-NMR-Spektroskopie bestimmt worden sind.

8. Verfahren gemäß einem der Ansprüche 1 bis 7, wobei das Polyoxyalkylenpolyol ein Polyetherpolyol und/oder Polyethercarbonatpolyol, bevorzugt ein Polyetherpolyol ist.

9. Verfahren gemäß Anspruch 8, wobei das Polyoxyalkylenpolyol ein Polyetherpolyol ist und das Polyetherpolyol durch Umsetzung einer H-funktionellen Startersubstanz mit Alkylenoxiden in Gegenwart eines Doppelmetallcyanid-Katalysators hergestellt worden ist.

10. Verfahren gemäß Anspruch 9, wobei das Alkylenoxid Ethylenoxid und/oder Propylenoxid ist.

11. Verfahren gemäß Anspruch 10, wobei der Gewichtsanteil des Propylenoxids 80 Gew.-% bis 100 Gew.-% bezogen auf die Summe der dosierten Massen des Propylenoxids und des Ethylenoxids ist.

12. Verfahren gemäß einem der Ansprüche 1 bis 11, wobei das Verfahren ohne Zusatz eines Lösungsmittels durchgeführt wird.

**13.** Verfahren gemäß einem der Ansprüche 1 bis 12, wobei das cyclische Carbonat kontinuierlich oder stufenweise zum Polyoxyalkylenpolyol bevorzugt zum Polyetherpolyol zugegeben und zum Polyoxyalkylencarbonatpolyol bevorzugt zum Polyethercarbonatpolyol umgesetzt wird.

**14.** Polyethercarbonatpolyol, erhältlich nach mindestens einem der Ansprüche 1 bis 13 umfassend einen Polyether Block (A) und mindestens einen Polyethercarbonat Block (B), wobei der Gewichtsanteil an $CO_2$ im Polyethercarbonatpolyol ≤ 4 Gew-%, bevorzugt ≤ 3 Gew.-% beträgt und wobei das Polyethercarbonatpolyol einen Anteil von ≥ 65 % primären OH-Endgruppen bezogen auf die Summe aus primären und sekundären OH-Endgruppen aufweist, wobei die primären OH-Endgruppen und der Gewichtsanteil an $CO_2$ mittels der im Experimentalteil offenbarten $^1$H-NMR-Spektroskopie bestimmt worden sind.

**15.** Verfahren zur Herstellung eines Polyurethans durch Umsetzung des Polyethercarbonatpolyols gemäß Anspruch 14 mit einem Polyisocyanat.

## Claims

**1.** Process for preparing a polyoxyalkylenecarbonate polyol, preferably a polyethercarbonate polyol, by reacting a polyoxyalkylene polyol, preferably a polyether polyol, with a cyclic carbonate in the presence of an amine catalyst.

**2.** Process according to Claim 1, wherein the number-average molar mass of the polyoxyalkylene polyol, preferably the polyether polyol, is ≥ 200 g/mol, preferably ≥ 1000 g/mol, more preferably ≥ 1500 g/mol, most preferably ≥ 2000 g/mol, where the number-average molar mass is determined by means of gel permeation chromatography (GPC) as disclosed in the experimental.

**3.** Process according to Claim 1 or 2, wherein the molar ratio between cyclic carbonate and the hydroxyl end groups of the polyoxyalkylene polyol, preferably the hydroxyl end groups of the polyether polyol, is from 1:1 to 20:1, preferably from 3:1 to 10:1 and more preferably from 5:1 to 9:1.

**4.** Process according to any of Claims 1 to 3, wherein the polyoxyalkylenecarbonate polyol, preferably the polyethercarbonate polyol, is prepared in the absence of any alkylene oxide.

**5.** Process according to any of Claims 1 to 4, wherein the cyclic carbonate is one or more compounds and is selected from the group consisting of 4-methyl-1,3-dioxolan-2-one, 1,3-dioxolan-2-one, 1,3-dioxan-2-one and 5,5-dimethyl-1,3-dioxan-2-one, preferably 1,3-dioxolan-2-one.

**6.** Process according to any of Claims 1 to 5, wherein the amine catalyst is one or more compound(s) and is selected from the group consisting of trimethylamine, triethylenediamine, tripropylamine, tributylamine, tripentylamine, trihexylamine, triphenylamine, dimethylethylamine, N,N-dimethylcyclohexylamine, tetramethylenediamine, 1-methyl-4-dimethylaminoethylpiperazine, triethylamine, tripropylamine, tributylamine, dimethylbutylamine, N,N-dimethylbenzylamine, N,N-dimethylcyclohexylamine, N,N',N''-tris(dimethylaminopropyl)hexahydrotriazine, dimethylaminopropylformamide, N,N,N',N'-tetramethylethylenediamine, N,N,N',N'-tetramethylbutanediamine, tetramethylhexanediamine, pentamethyldiethylenetriamine, tetramethyldiaminoethyl ether, dimethylpiperazine, 1,2-dimethylimidazole, 1-azabicyclo[3.3.0]octane, bis(dimethylaminopropyl)urea, bis(dimethylaminoethyl) ether, N-methylmorpholine, N-ethylmorpholine, N-cyclohexylmorpholine, 2,3-dimethyl-3,4,5,6-tetrahydropyrimidine, triethanolamine, diethanolamine, triisopropanolamine, N-methyldiethanolamine, N-ethyldiethanolamine, dimethylethanolamine, 1,8-diazabicyclo[5.4.0]undec-7-ene (DBU), 1,5,7-triazabicyclo[4.4.0]dec-5-ene (TBD), 1,4-diazabicyclo[2.2.2]octane (DABCO), imidazole, 1-methylimidazole, 2-methylimidazole, 4(5)-methylimidazole, 2,4(5)-dimethylimidazole, 1-ethylimidazole, 2-ethylimidazole, 1-phenylimidazole, 2-phenylimidazole, 4(5)-phenylimidazole and N,N-dimethylaminopyridine, guanidine, 1,1,3,3-tetramethylguanidine, pyridine, 1-azanaphthalene (quinoline), N-methylpiperidine, N-methylmorpholine, N,N'-dimethylpiperazine and N,N-dimethylaniline, preferably 1,8-diazabicyclo[5.4.0]undec-7-ene (DBU), 1,5,7-triazabicyclo[4.4.0]dec-5-ene (TBD), 1,4-diazabicyclo[2.2.2]octane (DABCO), more preferably 1,8-diazabicyclo[5.4.0]undec-7-ene (DBU).

**7.** Process according to any of Claims 1 to 6, wherein the polyoxyalkylene polyol, preferably the polyether polyol, has a proportion of secondary OH end groups of at least 75%, based on the sum total of primary and secondary OH end

groups, wherein the secondary OH end groups have been determined by means of $^1H$ NMR spectroscopy as disclosed in the experimental section.

**8.** Process according to any of Claims 1 to 7, wherein the polyoxyalkylene polyol is a polyether polyol and/or polyethercarbonate polyol, preferably a polyether polyol.

**9.** Process according to Claim 8, wherein the polyoxyalkylene polyol is a polyether polyol and the polyether polyol has been prepared by reaction of an H-functional starter substance with alkylene oxides in the presence of a double metal cyanide catalyst.

**10.** Process according to Claim 9, wherein the alkylene oxide is ethylene oxide and/or propylene oxide.

**11.** Process according to Claim 10, wherein the weight fraction of propylene oxide is 80% by weight to 100% by weight, based on the sum of the masses of propylene oxide and ethylene oxide metered in.

**12.** Process according to any of Claims 1 to 11, wherein the process is performed without addition of a solvent.

**13.** Process according to any of Claims 1 to 12, wherein the cyclic carbonate is added continuously or stepwise to the polyoxyalkylene polyol, preferably to the polyether polyol, and is converted to the polyoxyalkylenecarbonate polyol, preferably to the polyethercarbonate polyol.

**14.** Polyethercarbonate polyol obtainable according to at least one of Claims 1 to 13, comprising a polyether block (A) and at least one polyethercarbonate block (B), wherein the proportion by weight of $CO_2$ in the polyethercarbonate polyol is ≤ 4% by weight, preferably ≤ 3% by weight, and wherein the polyethercarbonate polyol has a proportion of ≥ 65% primary OH end groups based on the sum total of primary and secondary OH end groups, wherein the primary OH end groups and the proportion by weight of $CO_2$ have been determined by means of $^1H$ NMR spectroscopy as disclosed in the experimental section.

**15.** Process for preparing a polyurethane by reacting the polyethercarbonate polyol according to Claim 14 with a polyisocyanate.

**Revendications**

**1.** Procédé de préparation d'un polyoxyalkylènecarbonatepolyol, de préférence d'un polyéthercarbonatepolyol, par transformation d'un polyoxyalkylènepolyol, de préférence d'un polyétherpolyol, avec un carbonate cyclique en présence d'un catalyseur amine.

**2.** Procédé selon la revendication 1, la masse molaire moyenne en nombre du polyoxyalkylènepolyol, de préférence du polyétherpolyol, étant ≥ 200 g/mole, de préférence ≥ 1000 g/mole, de manière particulièrement préférée ≥ 1500 g/mole, de manière tout particulièrement préférée ≥ 2000 g/mole, la masse molaire moyenne en nombre étant déterminée au moyen de la chromatographie par perméation de gel (CPG) divulguée dans la partie expérimentale.

**3.** Procédé selon la revendication 1 ou 2, le rapport molaire entre le carbonate cyclique et les groupes terminaux hydroxyle du polyoxyalkylènepolyol, de préférence les groupes terminaux hydroxyle du polyétherpolyol, valant 1:1 à 20:1, de préférence 3:1 à 10:1 et de manière particulièrement préférée 5:1 à 9:1.

**4.** Procédé selon l'une des revendications 1 à 3, la préparation du polyoxyalkylènecarbonatepolyol, de préférence du polyéthercarbonatepolyol, se déroulant en l'absence d'un oxyde d'alkylène.

**5.** Procédé selon l'une des revendications 1 à 4, le carbonate cyclique étant un ou plusieurs composés et choisi dans le groupe constitué par la 4-méthyl-1,3-dioxolan-2-one, la 1,3-dioxolan-2-one, la 1,3-dioxan-2-one et la 5,5-diméthyl-1,3-dioxan-2-one, de préférence la 1,3-dioxolan-2-one.

**6.** Procédé selon l'une des revendications 1 à 5, le catalyseur amine étant un ou plusieurs composés et choisi dans le groupe constitué par la triméthylamine, la triéthylènediamine, la tripropylamine, la tributylamine, la tripentylamine, la trihexylamine, la triphénylamine, la diméthyléthylamine, la N,N-diméthylcyclohexylamine, la tétraméthylènediamine, la 1-méthyl-4-diméthylaminoéthylpipérazine, la triéthylamine, la tripropylamine, la tributylamine, la diméthylbutylamine, la N,N-diméthylbenzylamine, la N,N-diméthylcyclohexylamine, la N,N',N"-tris-(diméthylaminopropyl)hexahydrotriazine, le diméthylaminopropylformamide, la N,N,N',N'-tétraméthyléthylènediamine, la N,N,N',N'-tétraméthylbutanediamine, la tétraméthylhexanediamine, la pentaméthyldiéthylènetriamine, le tétraméthyldiaminoéthyléther, la diméthylpipérazine, le 1,2-diméthylimidazole, le 1-azabicyclo[3.3.0]octane, la bis-(diméthylaminopropyl)-urée, le bis-(diméthylaminoéthyl)-éther, la N-méthylmorpholine, la N-éthylmorpholine, la N-cyclohexylmorpholine, la 2,3-diméthyl-3,4,5,6-tétrahydropyrimidine, la triéthanolamine, la diéthanolamine, la triisopropanolamine, la N-méthyldiéthanolamine, la N-éthyldiéthanolamine, la diméthyléthanolamine, le 1,8-diazabicyclo[5.4.0]undéc-7-ène (DBU), le 1,5,7-triazabicyclo[4.4.0]déc-5-ène (TBD), le 1,4-diazabicyclo[2.2.2]octane (DABCO), l'imidazole, le 1-méthylimidazole, le 2-méthylimidazole, le 4(5)-méthylimidazole, le 2,4(5)diméthylimidazole, le 1-éthylimidazole, le 2-éthylimidazole, le 1-phénylimidazole, le 2-phénylimidazole, le 4(5)phénylimidazole et la N,N-diméthylaminopyridine, la guanidine, la 1,1,3,3,-tétraméthylguanidine, la pyridine, la 1-azanaphtaline (quinoléine), la N-méthylpipéridine, la N-méthylmorpholine, la N,N'-diméthylpipérazine et la N,N-diméthylaniline, de préférence le 1,8-diazabicyclo[5.4.0]undéc-7-ène (DBU), le 1,5,7-triazabicyclo[4.4.0]déc-5-ène (TBD), le 1,4-diazabicyclo[2.2.2]octane (DABCO), de manière particulièrement préférée le 1,8-diazabicyclo[5.4.0]undéc-7-ène (DBU).

**7.** Procédé selon l'une des revendications 1 à 6, le polyoxyalkylènepolyol, de préférence le polyétherpolyol, présentant une proportion d'au moins 75% de groupes OH terminaux secondaires, par rapport à la somme de groupes terminaux OH primaires et secondaires, les groupes terminaux OH secondaires ayant été déterminés au moyen de la spectroscopie $^{1}$H-RMN divulguée dans la partie expérimentale.

**8.** Procédé selon l'une des revendications 1 à 7, le polyoxyalkylènepolyol étant un polyétherpolyol et/ou un polyéthercarbonatepolyol, de préférence un polyétherpolyol.

**9.** Procédé selon la revendication 8, le polyoxyalkylènepolyol étant un polyétherpolyol et le polyétherpolyol ayant été préparé par transformation d'une substance de départ à fonctionnalité H avec des oxydes d'alkylène en présence d'un catalyseur de type cyanure métallique double.

**10.** Procédé selon la revendication 9, l'oxyde d'alkylène étant l'oxyde d'éthylène et/ou l'oxyde de propylène.

**11.** Procédé selon la revendication 10, la proportion en poids de l'oxyde de propylène étant de 80% en poids à 100% en poids, par rapport à la somme des masses dosées d'oxyde de propylène et d'oxyde d'éthylène.

**12.** Procédé selon l'une des revendications 1 à 11, le procédé étant réalisé sans ajout de solvant.

**13.** Procédé selon l'une des revendications 1 à 12, le carbonate cyclique étant ajouté en continu ou par étapes au polyoxyalkylènepolyol, de préférence au polyétherpolyol, et étant transformé en polyoxyalkylènecarbonatepolyol, de préférence en polyéthercarbonatepolyol.

**14.** Polyéthercarbonatepolyol, pouvant être obtenu selon au moins l'une des revendications 1 à 13, comprenant un bloc polyéther (A) et au moins un bloc polyéthercarbonate (B), la proportion en poids de $CO_2$ dans le polyéthercarbonatepolyol étant $\leq$ 4% en poids, de préférence $\leq$ 3% en poids et le polyéthercarbonatepolyol présentant une proportion $\geq$ 65% de groupes terminaux OH primaires, par rapport à la somme des groupes terminaux OH primaires et secondaires, les groupes terminaux OH primaires et la proportion en poids de $CO_2$ ayant été déterminés au moyen de la spectroscopie $^{1}$H-RMN divulguée dans la partie expérimentale.

**15.** Procédé de préparation d'un polyuréthane par transformation du polyéthercarbonatepolyol selon la revendication 14 avec un polyisocyanate.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6806345 B
- DE 102010043409 A1
- WO 2020127582 A1
- WO 2011000560 A1
- EP 3783044 A1
- EP 3783046 A1
- WO 2013028437 A1
- US 7304172 B2
- US 20120165549 A1
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- WO 0180994 A1


### In der Beschreibung aufgeführte Nicht-Patentliteratur


- **M. H. CHISHOLM et al.** *Macromolecules*, 2002, vol. 35, 6494
- **S. D. ALLEN**. *J. Am. Chem. Soc.*, 2002, vol. 124, 14284
- **BEISPIEL**. *Chemical Communications*, 2011, vol. 47, 141-163
- **G. RODICKI**. *Prog. Polym. Sci.*, 2000, vol. 29, 259-342